# FASCICULE DE BREVET EUROPEEN

(11) **EP 0 964 167 B1**
(45) Date de publication et mention de la délivrance du brevet: **17.09.2003**
(21) Numéro de dépôt: 99401243.3
(22) Date de dépôt: 21.05.1999
(51) Int. Cl.: F16B 9/02

(54) **Dispositif pour la fixation d'une unité hydraulique, notamment d'un système antiblocage de roues, dans le compartiment moteur d'un véhicule automobile**
Vorrichtung für die Befestigung einer Hydraulikeinheit, insbesondere eines Antiblockiersystems der Räder, im Motorraum eines Kraftfahrzeugs
Device for fastening a hydraulique unit, especially an anti-lock bracking system for wheels, in the engine compartment of an automotive vehicle

(30) Priorité: 12.06.1998 FR 9807455
(43) Date de publication de la demande: 15.12.1999
(73) Titulaire: AUTOMOBILES PEUGEOT, 75116 Paris (FR); AUTOMOBILES CITROEN, 92200 Neuilly-sur-Seine (FR)
(72) Inventeur: Guelon, Jean-Olivier, 75018 Paris (FR)
(74) Mandataire: Thinat, Michel

(56) Documents cités:
- DE-A- 2 527 404
- FR-A- 2 654 473
- FR-A- 2 738 306
- GB-A- 996 330
- US-A- 4 626 122

## Description

La présente invention concerne un dispositif pour la fixation d'une unité hydraulique, notamment d'un système antiblocage de roues, dans le compartiment moteur d'un véhicule automobile.

On connaît de tels dispositifs qui ont pour inconvénients majeurs d'utiliser des moyens de fixation du corps de l'unité hydraulique à la caisse du véhicule relativement complexes, rendant le montage de ce bloc à la caisse du véhicule fastidieux, et de ne pas filtrer efficacement les bruits engendrés par le bloc de l'unité hydraulique.

GB-A-996 330 décrit un dispositif de fixation comprenant les caractéristiques du préambule de la revendication 1. Cependant, ce dispositif de fixation connu n'est pas destiné à résoudre le problème de fixation d'une unité hydraulique, notamment d'un système antiblocage de roues d'un véhicule, dans le compartiment moteur de ce véhicule.

L'invention a pour but d'éliminer les inconvénients ci-dessus en proposant un dispositif de fixation comprenant les caractéristiques de la partie caractérisante de la revendication 1.

Avantageusement, la partie en forme de plaque du support comprend une languette sensiblement perpendiculaire à cette partie et pouvant s'engager dans une encoche radialement externe de la paroi annulaire de la liaison élastique de façon à orienter la liaison élastique relativement au support lors de leur assemblage.

Avantageusement, l'élément d'ancrage comprend une nervure radialement externe pouvant s'engager dans une encoche radialement interne de la paroi annulaire de la liaison élastique de façon à orienter l'élément d'ancrage relativement à la liaison élastique lors de leur assemblage.

L'élément d'ancrage comprend une paroi annulaire sur laquelle est formé le bourrelet annulaire externe et la liaison élastique comprend une partie annulaire située en dessous de la gorge annulaire radialement interne et venant élastiquement en appui forcé sur une partie de la paroi annulaire de l'élément d'ancrage située en dessous du bourrelet annulaire.

Les encoches radialement interne et externe de la liaison élastique s'étendent sur au moins une partie de la hauteur de la paroi annulaire de cette liaison et sont diamétralement opposées.

De préférence, la liaison élastique est un corps monobloc réalisé en une matière à base de caoutchouc.

La languette est réalisée par découpage dans la partie en forme de plaque du support.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en perspective éclatée des moyens permettant de fixer une unité hydraulique d'un système antiblocage de roues dans le compartiment moteur d'un véhicule automobile.

La figure 2 est une vue en coupe dans le plan contenant la ligne brisée II-II de la figure 1 des moyens de fixation en position assemblée les uns aux autres.

La figure 3 représente une première possibilité de montage des différents moyens de fixation pour fixer l'unité hydraulique à la caisse du véhicule.

La figure 4 représente une seconde possibilité de montage de ces moyens de fixation.

Le dispositif de l'invention qui va être décrit permet la fixation d'une unité hydraulique (non représentée) d'un système antiblocage de roues dans le compartiment moteur d'un véhicule automobile.

Ce dispositif peut également être utilisé pour fixer l'unité hydraulique d'un système de régulation antipatinage des roues d'un véhicule automobile, sans sortir du cadre de la présente invention.

En se reportant aux figures, le dispositif comprend au moins une liaison élastique 1 permettant de fixer un élément d'ancrage 2 solidaire du corps (non représenté) de l'unité hydraulique du système antiblocage de roues à un support 3 solidaire de la caisse du véhicule.

Bien entendu, le corps de l'unité hydraulique peut être fixé à la caisse du véhicule par deux ou plusieurs jeux de moyens de fixation comprenant chacun une liaison élastique 1, un élément d'ancrage 2 implantés dans le support 3.

Chaque liaison élastique 1 est en forme générale d'anneau dont la paroi annulaire 4 comprend une gorge annulaire radialement interne 5 à section transversale concave, dans le cas présent circulairement arquée, et une gorge annulaire radialement externe 6 à section transversale en forme de U.

Chaque élément d'ancrage 2 est constitué d'une plaque supérieure en forme de disque 7 et d'une paroi annulaire 8 définissant d'une manière générale une bague cylindrique fixée sous la plaque en forme de disque 7 en laissant subsister relativement à cette dernière un rebord annulaire 7a. L'élément d'ancrage 2 comprend également un bourrelet annulaire 9 réalisé sur la surface latérale externe de la paroi 8 à mi-hauteur de cette dernière. Ce bourrelet annulaire externe 9 peut s'encastrer dans la gorge annulaire radialement interne 5 de la liaison élastique 1. L'élément d'ancrage 2 peut être fixé par tout moyen approprié à la paroi de fond du corps de l'unité hydraulique, par exemple par une vis de fixation (non représentée) traversant un trou central 7b de la partie en forme de disque 7 7 et dont la tête est logée dans la paroi annulaire 8. En position assemblée de la liaison élastique 1 à l'élément d'ancrage 2, cette liaison a ses deux parties annulaires de paroi respectivement supérieure la et inférieure 1b en appui forcé, par leurs surfaces latérales internes respectives, sous la contrainte élastique exercée par le matériau de cette liaison, respectivement sur les deux parties de paroi latérales supérieure 8a et inférieure 8b de la paroi 8 et situées l'une 8a au-dessus du bourrelet 9 et l'autre 8b en dessous de ce bourrelet. A cette position assemblée, le rebord 7a de la plaque en forme de disque 7 est en appui sur la surface supérieure annulaire de la liaison élastique 1. De la sorte, la liaison élastique 1 est rigidement fixée à l'élément d'ancrage 2.

Le support 3, qui peut être fixé par tout moyen approprié à la caisse du véhicule, par exemple par des vis de fixation (non représentées), comprend une partie en forme de plaque 10 pourvue d'une ouverture circulaire 11 d'un diamètre tel que le bord de l'ouverture 11 peut être emboîté dans la gorge annulaire radialement externe 6 de la liaison élastique 1.

Pour permettre la fixation de la liaison élastique 1 au support 3 à une position relative déterminée, la plaque 10 du support 3 comporte une languette 12 sensiblement perpendiculaire à la plaque 10 et obtenue par exemple par découpage dans cette plaque. La languette 12 s'engage, lors de l'assemblage de la liaison élastique 1 au support 3, dans une encoche radialement externe 13 de la paroi annulaire 4 de la liaison élastique 1 et qui s'étend au moins sur une partie de la hauteur de la paroi 4. Dans le cas présent, l'encoche 13 s'étend approximativement sur la moitié de la hauteur de la paroi 4 de la liaison 1.

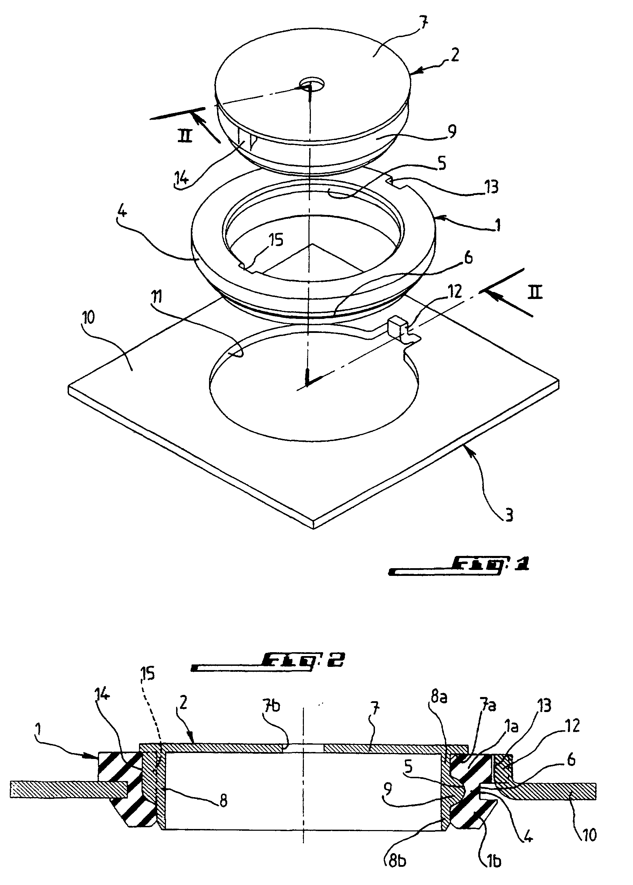

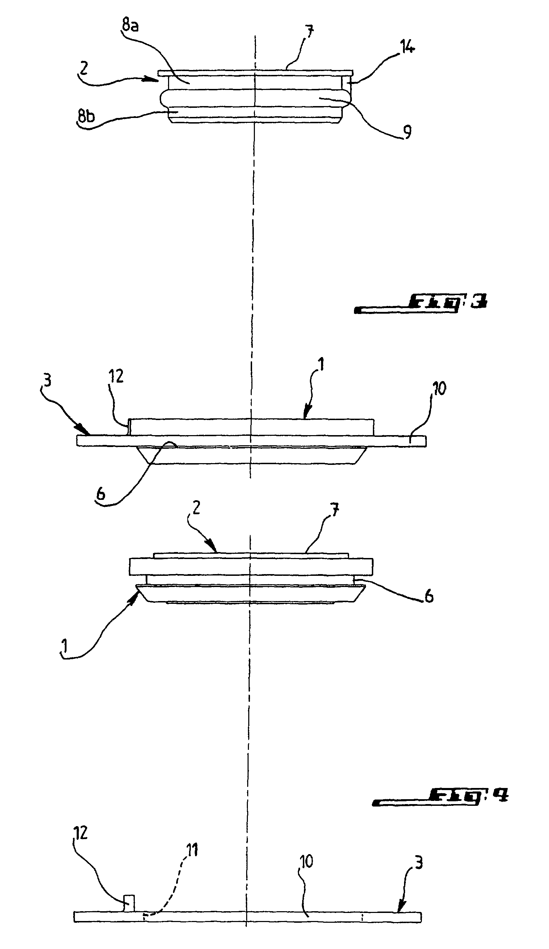

Pour permettre également l'assemblage de l'élément d'ancrage 2 à une position d'orientation relativement à la liaison élastique 1, l'élément 2 comprend une nervure radialement externe 14 solidaire de la paroi 8 en s'étendant au moins sur une hauteur de cette dernière, de préférence sur les trois-quart de cette hauteur comme cela ressort mieux de la figure 2. Cette nervure s'engage en position assemblée de l'élément d'ancrage 2 à la liaison élastique 1, dans une encoche radialement interne 15 à section transversale en forme de U de la paroi annulaire 4 de la liaison élastique 1. L'encoche 15 s'étend sur au moins une partie de la hauteur de la paroi 4 de la liaison 1, dans le cas présent approximativement sur les trois-quart de cette hauteur comme le montre également la figure 2.

De préférence, la liaison élastique 1 est un corps monobloc réalisé en une matière à base de caoutchouc.

Les figures 3 et 4 représentent deux possibilités de montage de la liaison élastique 1 et de l'élément d'ancrage 2 au support 3 pour permettre la fixation de l'unité hydraulique à la caisse du véhicule.

Selon la figure 3, la liaison élastique 1 est tout d'abord montée sur le support 3 en emboîtant l'ouverture circulaire 11 de celui-ci dans la gorge annulaire radialement externe 6 de l'élément élastique 1. Ensuite, l'élément d'ancrage 2 est ancré dans l'ensemble constitué par la liaison élastique 1 et le support 3 en encastrant son bourrelet annulaire externe 9 dans la gorge annulaire radialement interne 5 de l'élément élastique 1.

Selon la figure 4, l'élément d'ancrage 2 est tout d'abord ancré dans la liaison élastique 1 en encastrant ou emboîtant le bourrelet annulaire externe 9 de l'élément 2 dans la gorge radialement interne de forme conjuguée 5 de la liaison élastique 1. Ensuite, l'ensemble constitué par l'élément élastique 1 et l'élément d'ancrage 2 est assemblé au support 3 en emboîtant le bord circulaire de l'ouverture 1 du support 3 dans la gorge annulaire radialement externe 6 de la liaison élastique 1.

Le dispositif conforme à l'invention permettant de fixer une unité hydraulique d'un système antiblocage de roues dans le compartiment moteur d'un véhicule automobile comporte un nombre de pièces diminué par rapport aux dispositifs connus et permet une rapidité et une facilité de montage des différents éléments le constituant. Ce dispositif permet également de maintenir l'unité hydraulique à la caisse du véhicule suivant des efforts de maintien plus élevés que les dispositifs antérieurement connus et le montage à une position d'orientation déterminée de chaque élément d'ancrage servant de support au corps de l'unité hydraulique permet le montage de cette dernière à la position relative souhaitée dans le compartiment moteur du véhicule.

## Revendications

1. Dispositif de fixation comprenant au moins une liaison élastique (1) de fixation d'un élément d'ancrage (2) à un support (3) d'une caisse d'un véhicule automobile, la liaison élastique (1) étant en forme générale d'anneau dont la paroi (4) comprend une gorge annulaire radialement interne (5) à section transversale concave, par exemple circulairement arquée, et une gorge annulaire radialement externe (6) à section transversale en forme de U, le support (3) ayant une partie en forme de plaque (10) pourvue d'une ouverture circulaire (11) dont le bord peut être emboîté dans la gorge annulaire radialement externe (6) de la liaison élastique (1), **caractérisé en ce que** l'élément d'ancrage (2) est solidaire du corps d'une unité hydraulique, notamment d'un système antiblocage de roues du véhicule, et comprend un bourrelet annulaire externe (9) pouvant s'encastrer dans la gorge annulaire radialement interne (5) de la liaison élastique (1) et **en ce que** le support (3) est situé dans le compartiment moteur du véhicule.

2. Dispositif selon la revendication 1, **caractérisé en ce que** la partie en forme de plaque (10) du support (3) comprend une languette (12) sensiblement perpendiculaire à cette partie (10) et pouvant s'engager dans une encoche radialement externe (13) de la paroi annulaire (4) de la liaison élastique (1) de façon à orienter la liaison élastique (1) relativement au support (3) lors de leur assemblage.

3. Dispositif selon la revendication 1 ou 2, **caractérisé en ce que** l'élément d'ancrage (2) comprend une nervure radialement externe (14) pouvant s'engager dans une encoche radialement interne (15) de la paroi annulaire (4) de la liaison élastique (1) de façon à orienter l'élément d'ancrage (2) relativement à la liaison élastique (1) lors de leur assemblage.

4. Dispositif selon l'une des revendications 1 à 3, **caractérisé en ce que** l'élément d'ancrage (2) comprend une paroi annulaire (8) sur laquelle est formé le bourrelet annulaire externe (9) et **en ce que** la liaison élastique (1) comprend une partie annulaire (1b située en dessous de la gorge annulaire radialement interne (5) et venant élastiquement en appui forcé sur une partie (8b) de la paroi annulaire (8) de l'élément d'ancrage (2) située en dessous du bourrelet annulaire (9).

5. Dispositif selon la revendication 3 ou 4, **caractérisé en ce que** les encoches radialement interne (15) et externe (13) de la liaison élastique (1) s'étendent sur au moins une partie de la hauteur de la paroi annulaire (4) de cette liaison.

6. Dispositif selon l'une des revendications 3 à 5, **caractérisé en ce que** les encoches radialement interne (15) et externe (13) sont diamétralement opposées.

7. Dispositif selon l'une des revendications précédentes, **caractérisé en ce que** la liaison élastique (1) est un corps monobloc réalisé en une matière à base de caoutchouc.

8. Dispositif selon l'une des revendications 2 à 7, **caractérisé en ce que** la languette (12) est réalisée par découpage dans la partie en forme de plaque (10) du support (3).

## Patentansprüche

1. Befestigungsvorrichtung mit zumindest einer elastischen Verbindung (1) zum Befestigen eines Verankerungsteils (2) an einem Träger (3) eines Kraftfahrzeugaufbaus, wobei die elastische Verbindung (1) allgemein in Ringform vorliegt, deren Wandung (4) eine radial innere Ringnut (5) mit konkavem Querschnitt, beispielsweise in Kreisbogenform, und eine radial äußere Ringnut (6) mit U-förmigem Querschnitt enthält, wobei der Träger (3) an seinem plattenförmigen Teil (10) mit einer kreisrunden Öffnung (11) versehen ist, deren Rand in die radial äußere Ringnut (6) der elastischen Verbindung (1) einsteckbar ist, **dadurch gekennzeichnet, dass** das Verankerungsteil (2) fest mit dem Körper einer Hydraulikeinheit, insbesondere eines Antiblockiersystems der Räder des Fahrzeugs verbunden ist und eine äußere Ringwulst (9) aufweist, die in die radial innere Ringnut (5) der elastischen Verbindung (1) eingelassen werden kann, und dass der Träger (3) sich im Motorraum des Fahrzeugs befindet.

2. Vorrichtung nach Anspruch 1, **dadurch gekennzeichnet, dass** der plattenförmige Teil (10) des Trägers (3) eine Zunge (12) aufweist, die sich im wesentlichen senkrecht zu diesem Teil (10) erstreckt und in eine radial äußere Aussparung (13) der ringförmigen Wandung (4) der elastischen Verbindung (1) so eingreifen kann, dass die elastische Verbindung (1) gegenüber dem Träger (3) bei deren Montage ausgerichtet wird.

3. Vorrichtung nach Anspruch 1 oder 2, **dadurch gekennzeichnet, dass** das Verankerungsteil (2) eine radial äußere Rippe (14) enthält, die in die radial innere Aussparung (15) der ringförmigen Wandung (4) der elastischen Verbindung (1) so eingreifen kann, dass das Verankerungsteil (2) gegenüber der elastischen Verbindung (1) bei deren Montage ausgerichtet wird.

4. Vorrichtung nach einem der Ansprüche 1 bis 3, **dadurch gekennzeichnet, dass** das Verankerungsteil (2) eine ringförmige Wandung (8) enthält, an der die äußere Ringwulst (9) angeformt ist, und dass die elastische Verbindung (1) einen ringförmigen Teil (1b) enthält, der sich unterhalb der radial inneren Ringnut (5) befindet und sich zwangsweise elastisch an einem Teil (8b) der ringförmigen Wandung (8) des Verankerungsteils (2) abstützt, der sich unterhalb der Ringwulst (9) befindet.

5. Vorrichtung nach Anspruch 3 oder 4, **dadurch gekennzeichnet, dass** die radial innere (15) und die radial äußere Aussparung (13) der elastischen Verbindung (1) sich zumindest über einen Teil der Höhe der ringförmigen Wandung (4) dieser Verbindung erstrecken.

6. Vorrichtung nach einem der Ansprüche 3 bis 5, **dadurch gekennzeichnet, dass** die radial innere (15) und die radial äußere Aussparung (13) einander diametral gegenüberliegen.

7. Vorrichtung nach einem der vorangehenden Ansprüche, **dadurch gekennzeichnet, dass** die elastische Verbindung (1) ein einstückiger Körper aus einem Material auf Gummibasis ist.

8. Vorrichtung nach einem der Ansprüche 2 bis 7, **dadurch gekennzeichnet, dass** die Zunge (12) durch Ausstanzen aus dem plattenförmigen Teil (10) des Trägers (3) hergestellt ist.

## Claims

1. Fixing device comprising at least one flexible link (1) for fixing an anchoring element (2) to a support (3) of the bodywork of a motor vehicle, the flexible link (1) being in the general form of a ring, the wall (4) of which includes a radially internal annular groove (5) which has a concave cross-section, for example curved in the form of a circle, and a radially external annular groove (6) which has a U-shaped cross-section, the support (3) having a plate-shaped portion (10) provided with a circular opening (11), the edge of which can be fitted into the radially external annular groove (6) of the flexible link (1), **characterized in that** the anchoring element (2) is firmly attached to the body of a hydraulic unit, especially an anti-locking system in respect of the wheels of the vehicle, and includes an external annular flange (9) capable of being tailed into the radially internal annular groove (5) of the flexible link (1), and **in that** the support (3) is located in the engine compartment of the vehicle.

2. Device according to Claim 1, **characterized in that** the plate-shaped portion (10) of the support (3) includes a tongue (12) which is substantially perpendicular to this portion (10) and is capable of engaging in a radially external notch (13) in the annular wall (4) of the flexible link (1) so as to orient the flexible link (1) relative to the support (3) on their assembly.

3. Device according to Claim 1 or 2, **characterized in that** the anchoring element (2) includes a radially external rib (14) which is capable of engaging in a radially internal notch (15) in the annular wall (4) of the flexible link (1) so as to orient the anchoring element (2) relative to the flexible link (1) on their assembly.

4. Device according to one of Claims 1 to 3, **characterized in that** the anchoring element (2) includes an annular wall (8) on which the external annular flange (9) is formed, and **in that** the flexible link (1) includes an annular portion (1b located underneath the radially internal annular groove (5) and coming to rest with elastic force against a portion (8b) of the annular wall (8) of the anchoring element (2), said portion (8b) being located underneath the annular flange (9).

5. Device according to Claim 3 or 4, **characterized in that** the radially internal (15) and external (13) notches in the flexible link (1) extend over at least a portion of the height of the annular wall (4) of this link.

6. Device according to one of Claims 3 to 5, **characterized in that** the radially internal (15) and external (13) notches are diametrically opposite one another.

7. Device according to one of the preceding claims, **characterized in that** the flexible link (1) is a one-piece body made of a rubber-based material.

8. Device according to one of Claims 2 to 7, **characterized in that** the tongue (12) is formed from a cut-out made in the plate-shaped portion (10) of the support (3).
